# EUROPEAN PATENT APPLICATION

(11) **EP 0 860 936 A2**
(43) Date of publication of application: **26.08.1998**
(21) Application number: 98300982.0
(22) Date of filing: 11.02.1998
(51) Int. Cl.: H02M 3/28, H02J 5/00, H01F 38/18, H02K 47/14

(54) **Transfer of electrical energy**

(30) Priority: 20.02.1997 ZA 9701436
(71) Applicant: Bowker, Charles, Durban North (ZA)
(72) Inventor: Bowker, Charles, Durban North (ZA)
(74) Representative: Spence, Anne

(57) **Abstract**

A method of and apparatus for transferring electrical energy between two components which move relatively to one another. The electrical energy in one component is converted to high frequency energy which is then caused to be transferred across a gap to the other component. The high frequency energy transferred to the second component may then be converted to electrical energy.

## Description

### FIELD OF THE INVENTION

This invention relates to the transfer of electrical energy between two components, at least one of which is movable relative to the other. The invention has particular application to alternators and electric motors which comprise one stationary component and one component rotatably associated therewith.

### BACKGROUND OF THE INVENTION

The transfer of energy to a rotor of an alternator, for example, is generally made through one or more commutators or spring-loaded carbon brushes. These are subject to wear and eventually to arcing and the electrical energy transfer is not as efficient as may be desired.

It is an object of the present invention to provide a method and means of transferring electrical energy which is far more efficient than prior arrangements and which avoids the disadvantages of wear and arcing.

### THE INVENTION

According to the invention a method of transferring electrical energy between two components movable relative to one another, including the step of converting electrical energy to high frequency energy in one component, causing the high frequency energy to be transferred across a gap to the other component and, if required, converting the high frequency energy in the other component to electrical energy such as direct current.

In the preferred form of the invention the components comprise a stationary and a rotating core with a small gap between adjacent surfaces thereof.

Electrical energy, for example 12 volt direct current, is converted to high frequency energy and is directed to the stationary core, and thence, by induction, to the rotating core with virtually no loss of energy.

The stationary core may be a ferrite core and the rotating core may also be of ferrite. In an alternator, for example, the high frequency is re-converted to direct current in the rotor.

The conversion of electrical energy into high frequency energy is preferably achieved using switch mode power supply techniques.

An important advantage of the present invention is that it is possible to dispense with a voltage regulator and thereby reduce the mass, and the cost of alternators, by virtue of the fact that it is possible to control the high frequency at source. This also has the advantage that the alternator is able to charge the battery or batteries efficiently and to full capacity.

### EMBODIMENT OF THE INVENTION

An embodiment of the invention is described below with reference to the accompanying block circuit diagram which is labeled for a proper understanding thereof. In addition, a sectional side view of a typical arrangement according to the invention is attached of a portion of an alternator.

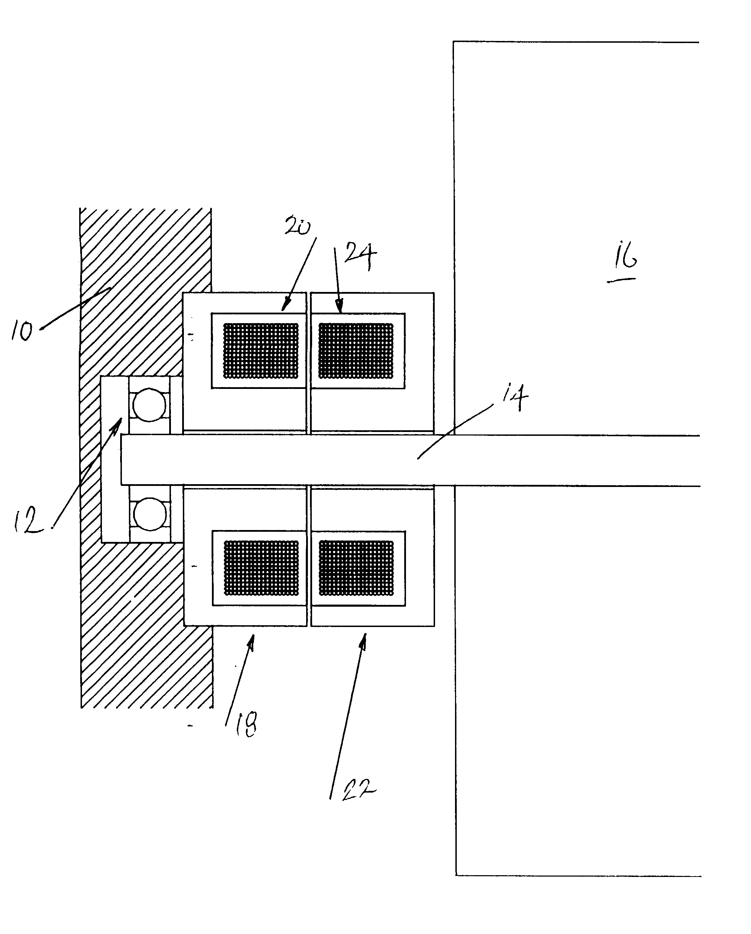

In the drawing, the housing 10 of an alternator with bearings 12 has a shaft 14 splined to a rotor 16. A fixed core 18 has windings indicated by reference 20 and the rotor has a core 22 with windings indicated by reference 24. As indicated in the circuit diagram, a source of electrical energy is fed to a high frequency switch mode unit, the high frequency energy being transferred to the core 18 and thence to the rotor core 22 by induction. A suitable circuitry is provided to reconvert the high frequency to an excitation current for the electromagnet of the rotor.

## Claims

1. A method of transferring electrical energy between two components movable relative to one another, including the step of converting electrical energy to high frequency energy in one component, causing the high frequency energy to be transferred across a gap to the other component and, if required, converting the high frequency energy in the other component to electrical energy such as direct current.

2. The method according to claim 1 in which the components comprise a stationary and a rotating core with a small gap between adjacent surfaces thereof.

3. The method according to claim 1 or claim 2 in which the electrical energy is 12 volt direct current, which is converted to high frequency energy and is directed to the stationary core, and thence, by induction, to the rotating core with virtually no loss of energy.

4. The method according to claim 3 in which the stationary and the rotating core are of ferrite.

5. The method according to any of the above claims in which, in the case of an alternator, the high frequency is re-converted to direct current in the rotor.

6. The method according to any of the above claims in which the conversion of electrical energy into high frequency energy is preferably achieved using switch mode power supply techniques.

7. A method of transferring electrical energy substantially as described with reference to the drawing.

8. Apparatus for carrying out the method according to any of the above claims, substantially as described in the drawing.
